(19) Europäisches Patentamt
European Patent Office
Office européen des brevets

(11) Publication number: **0 531 116 B1**

## EUROPEAN PATENT SPECIFICATION

(45) Date of publication of patent specification: **31.05.95**

(51) Int. Cl.⁶: **A01N 43/08**, //(A01N43/08, 43:40,47:30)

(21) Application number: **92307977.6**

(22) Date of filing: **03.09.92**

(54) **Herbicidal compositions.**

(30) Priority: **04.09.91 GB 9118871**

(43) Date of publication of application:
**10.03.93 Bulletin 93/10**

(45) Publication of the grant of the patent:
**31.05.95 Bulletin 95/22**

(84) Designated Contracting States:
**AT BE CH DE DK ES FR GB GR IE IT LI LU NL PT SE**

(56) References cited:
**EP-A- 0 211 518**

**C.R.WORTHING 'The Pesticide Manual, 9th edition' , THE BRITISH CROP PROTECTION COUNCIL , THORNTON HEATH, GB**

**CHEMICAL ABSTRACTS, vol. 107, no. 3, 20 July 1987, Columbus, Ohio, US; abstract no. 19518z, MAY & BAKER LTD. 'Synergistic herbicides containing diflufenican and ureas' page 249 ;**

**Pesticide Manual 9th Edition (1991), page 283**

(73) Proprietor: **RHONE-POULENC AGRICULTURE LTD.**
**Fyfield Road**
**Ongar,**
**Essex CM5 0HW (GB)**

(72) Inventor: **Rognon, Jacques**
**c/o Rhone-Poulenc Agriculture Ltd.,**
**Fyfield Road**
**Ongar,**
**Essex CM5 0HW (GB)**
Inventor: **Gamblin, Alan**
**c/o Rhone-Poulenc Agriculture Ltd.,**
**Fyfield Road**
**Ongar,**
**Essex CM5 0HW (GB)**

(74) Representative: **Bentham, Stephen et al**
**J.A. KEMP & CO.**
**14 South Square**
**Gray's Inn**
**London WC1R 5LX (GB)**

## Description

The present invention relates to new herbicidal compositions comprising a mixture of 5-(methylamino)-2-phenyl-4-[3-(trifluoromethyl)-phenyl]-3-(2H)-furanone i.e. flurtamone and N-(2,4-difluorophenyl)-2[3-(trifluoromethyl)phenoxy]-3-pyridinecarboxamide, i.e. diflufenican. It also relates to the use of the mixture per se and to a method of controlling weeds.

Flurtamone is a well known selective herbicide disclosed in the Pesticide Manual 9th edition (British Crop Protection Council) recommended for the control of a large number of grass and broad-leaved weed species in cotton, peanuts, sorghum and sunflowers, applied pre- or post- emergence. Diflufenican is also a well known selective herbicide disclosed in the Pesticide Manual 9th edition recommended for the control of a large number of grass and broad-leaved weed species in autumn sown wheat or barley.

However certain weeds that constitute a serious problem are insufficiently controlled by flurtamone alone. Thus Avena fatua, Alopecurus myosuroides, Galium aparine and Lolium multiflorum need to be controlled more effectively.

A method of controlling the growth of weeds by application of diflufenican in combination with a urea herbicide is disclosed in EP-A-0211518.

As a result of research and experimentation it has been found that the use of diflufenican in combination with flurtamone, extends the spectrum of herbicidal activity to include the control of Avena fatua, Alopecurus myosuroides, Galium aparine and lolium multiflorum. Therefore the said combination represents an important technological advance. The term "combination" as used in this specification refers to the "combination" of flurtamone and diflufenican.

Surprisingly, it has been found that the combined herbicidal activity of flurtamone with diflufenican, for the control of certain weed species is greater than expected, without an unacceptable increase in crop phytotoxicity, applied pre-or post- emergence (e.g. as a pre- or post- emergence aqueous spray), i.e. the herbicidal activity of flurtamone with diflufenican showed an unexpected degree of synergism, as defined by Limpel, L.E., P.H. Schuldt and D. Lamont, 1962, 1. Proc. NEWCC 16, 48-53, using the formula:-

$$E = X + Y - \frac{X.Y}{100}$$

where

E = the expected percent inhibition of growth by a mixture of two herbicides A and B at defined doses.

X = the percent inhibition of growth by herbicide A at a defined dose.

Y = the percent inhibition of growth by herbicide B at a defined dose.

When the observed percentage of inhibition by the mixture is greater than the expected value E using the formula above the combination is synergistic.

The remarkable synergism on Avena fatua, Alopecurus myosuroides, Galium aparine and Lolium multiflorum gives improved reliability in controlling these serious competitive weeds of many crop species, leading to a considerable reduction in the amount of active ingredient required for weed control.

A high level of control of these weeds is desirable to prevent:-

1) yield loss, through competition and/or difficulties with harvest,

2) crop contamination leading to storage and cleaning difficulties, and

3) unacceptable weed seed return to the soil.

Accordingly the present invention provides a new herbicidal composition comprising:

(a) flurtamone; and

(b) diflufenican;

in association with a herbicidally acceptable diluent or carrier and/or surface active agent.

These compositions may be used as herbicides in a broad range of dose rates (a): (b) depending on the crop to be treated, the weeds present and their population, the compositions used, the timing of the treatment, the climatic and edaphic conditions, and the dose ratio of (a):(b) required to obtain a satisfactory level of weed control but not necessarily totally weed-free. When applied to a crop-growing area, the rate of application should be sufficient to control the growth of weeds without causing substantial permanent damage to the crop.

Generally a composition in which the ratio of (a):(b) is from 80:1 to 0.1:1 is used.

2

Preferably a composition in which the ratio of (a):(b) is from 5.3:1 to 0.75:1 is used. More preferably a composition in which the ratio of (a):(b) is from 3.25:1 to 1.66:1 is used.

Unless otherwise stated, the percentages and ratios appearing in this specification are by weight.

Generally the active ingredients are homogeneously dispersed in other components cited hereinafter, such as a diluent or carrier and/or surface-active agents.

The term "herbicidal compositions" is used in a broad sense, to include not only compositions which are ready for use as herbicides but also concentrates which must be diluted before use. Preferably, the compositions contain from 0.05 to 90% by weight of flurtamone and diflufenican.

The herbicidal composition may contain solid and liquid carriers and surface-active agents (e.g. wetters, dispersants or emulsifiers alone or in combination). Surface-active agents that may be present in the herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinonyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, absorbent carbon black and clays such as kaolin and bentonite. Examples of suitable liquid diluents include water, acetophenone, cyclohexanone, isophorone, toluene, xylene, and mineral, animal, and vegetable oils (these diluents may be used alone or in combination).

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are wettable powders or water dispersible granules. Most preferred herbicidal compositions are aqueous suspension concentrates.

The wettable powders (or powders for spraying) usually contain from 20 to 95% of combination, and they usually contain, in addition to the solid vehicle, from 0 to 5% of a wetting agent, from 3 to 10% of a dispersant agent and if necessary, from 0 to 10% of one or more stabilisers and/or other additives such as penetrating agents, adhesives or anti-caking agents and colourings.

The aqueous suspension concentrates, which are applicable by spraying, are prepared in such a way as to obtain a stable fluid product (by fine grinding) which does not settle out and they usually contain from 10 to 75% of combination, from 0.5 to 15% of surface acting agents, from 0.1 to 10% of thixotropic agents, from 0 to 10% of suitable additives such as antifoams, corrosion inhibitors, stabilisers, and water or an organic liquid in which the active substance is sparingly soluble or insoluble. Some organic solid substances or inorganic salts can be dissolved in order to assist in preventing sedimentation or as antifreeze for the water.

Herbicidal compositions according to the present invention may also comprise flurtamone and diflufenican in association with, and preferably homogeneously dispersed in, one or more other pesticidally active compounds and, if desired one or more compatible pesticidally acceptable diluents and carriers.

Preferred herbicidal compositions according to the present invention which comprise flurtamone and diflufenican in association with other herbicides are those which further comprise isoproturon i.e. 3-(4-isopropylphenyl)-1,1-dimethylurea. Preferably for compositions which comprise isoproturon the ratio of diflufenican: isoproturon is from 1:3 to 1:25 wt/wt, preferably from 1:6 to 1:15 wt/wt.

By way of example, there follows the composition of an aqueous suspension concentrate.

3

**Example A1:**

| combination | 500 g |
|---|---|
| polycondensate of ethylene oxide with trisyryphenol phosphate | 50 g |
| polycondensate of ethylene oxide with alkylphenol | 50 g |
| poly (sodium carboxylate) | 20 g |
| ethylene glycol | 50 g |
| organopolysiloxane oil (antifoam) | 1 g |
| polysaccharide | 1.5 g |
| water | 316.5 g. |

The compositions of the invention may be made up as an article of manufacture comprising flurtamone and diflufenican and optionally other pesticidally active compounds as hereinbefore described, and as is preferred, a herbicidal composition as hereinbefore described and preferably a herbicidal concentrate which must be diluted before use, comprising the flurtamone and diflufenican within a container for the aforesaid flurtamone and diflufenican or a said herbicidal composition and instructions physically associated with the aforesaid container, setting out the manner in which the aforesaid flurtamone and diflufenican or herbicidal composition contained therein, is to be used to control the growth of weeds. The containers will normally be of the types conventionally used for the storage of chemical substances and concentrated herbicidal compositions, which are solids or liquids at normal ambient temperatures, for example cans and drums of plastics materials or metal (which may be internally-lacquered), bottles of glass and plastics materials; and when the contents of the container is a solid, for example a granular herbicidal composition, boxes, for example of cardboard, plastics material, metal or sacks. The containers will normally be of sufficient capacity, to contain amounts of the active ingredients or herbicidal compositions sufficient to treat at least one hectare of ground, to control the growth of weeds therein but will not exceed a size which is convenient for conventional methods of handling. Instructions will be physically associated with the container, for example by being printed directly thereon or on a label or tag affixed thereto. The directions will normally indicate that the contents of the container, after dilution if necessary, are to be applied to control the growth of weeds at rates of application from 50g to 2000g of flurtamone and from 25g to 500g of diflufenican per hectare in the manner and for the purpose hereinbefore described.

According to a further feature of the present invention, there is provided a product comprising (a) flurtamone and (b) diflufenican as a combined preparation for simultaneous, separate or sequential use in controlling the growth of weeds at a locus.

According to a further feature of the present invention there is provided a method of controlling the growth of weeds at a locus which comprises applying to the locus (a) flurtamone, and (b) diflufenican by pre- or post- emergence application. They are generally applied at application rates of 400 to 150 g/ha of (a) and 200 to 75 g/ha of (b), in proportions of from 5.3:1 to 0.75:1 of (a):(b); and preferably at application rates from 325 g/ha of (a) and 100 g/ha of (b), to 250 g/ha of (a) and 150 g/ha of (b), in proportions of 3.25:1 to 1.66:1 wt/wt of (a):(b). The method of the invention may be used to control a very wide spectrum of annual broad-leafed weeds and grass weeds in crops including for example peas and cereal crops, e.g. wheat, barley and rye, without significant permanent damage to the crop. The combined use described above offers both foliar and residual activity and consequently can be employed over a long period of crop development, i.e. from pre-weed pre-crop emergence to post-weed post-crop emergence. In the method according to this feature of the present invention, application of the herbicides to control weeds in an autumn-sown cereal crop, e.g. winter wheat or winter barley, is preferred.

In the method described above, the combined use of (a) flurtamone and (b) diflufenican in proportions of 2.5:1 to 2:1 wt/wt of (a):(b) is particularly preferred.

Flurtamone and diflufenican in combination may be used to control the growth of weeds, especially those indicated below, by pre- or post-emergence application in established orchards and other tree-growing areas, for example forests, woods and parks, and plantations e.g. sugar cane, oil palm and rubber plantations. For this purpose they may be applied in a directional or non-directional fashion (e.g. by directional or non-directional spraying) to the weeds or to the soil in which they are expected to appear, before or after planting of the trees or plantations at application rates between 250 g and 1000 g of flurtamone and from 200 g to 500 g of diflufenican per hectare.

Flurtamone and diflufenican in combination may also be used to control the growth of weeds, especially those indicated below, at loci which are not crop-growing areas but in which the control of weeds is nevertheless desirable. Examples of such non-crop-growing areas include airfields, industrial sites, railways, roadside verges, the verges of rivers, irrigation and other waterways, scrublands and fallow or uncultivated land, in particular where it is desired to control the growth of weeds in order to reduce fire risks. When used for such purposes in which a total herbicidal effect is frequently desired, the active compounds are normally applied at dosage rates higher than those used in crop-growing areas as hereinbefore described. The precise dosage will depend upon the nature of the vegetation treated and the effect sought. Pre- or post-emergence application, and preferably pre-emergence application, in a directional or non-directional fashion (e.g. by directional or non-directional spraying) at application rates from 500 g to 2000g of flurtamone and from 250 g to 500 g of diflufenican per hectare are particularly suitable for this purpose.

By the term 'pre-emergence application' is meant application to the soil in which the weed seeds or seedlings are present before emergence of the weeds above the surface of the soil. By the term 'post-emergence application' is meant application to the aerial or exposed portions of the weeds which have emerged above the surface of the soil. By the term 'foliar activity' is meant herbicidal activity produced by application to the aerial or exposed portions of the weeds which have emerged above the surface of the soil. By the term 'residual activity' is meant herbicidal activity produced by application to the soil in which weed seeds or seedlings are present before emergence of the weeds above the surface of the soil, whereby seedlings present at the time of application or which germinate subsequent to application from seeds present in the soil, are controlled. Weeds that may be controlled by this method include

broad-leafed weeds, for example, Abutilon theophrasti, Amaranthus retroflexus, Bidens pilosa, Chenopodium album, Galium aparine, Ipomea spp. e.g Ipomea purpurea, Lamium purpureum, Matricaria inodora, Sesbania exalta, Sinapis arvensis, Solanum nigrim, Stellaria media, Veronica hederifolia, Veronica persica, Viola arvensis, and Xanthium strumarium,

and grass weeds, for example Alopecurus myosuroides, Avena fatua, Digitaria sanguinalis, Echinochloa crus-galli, Eleusine indica, Lolium multiflorum, Setaria viridis and Sorghum halepense,

and sedges, for example Cyperus esculentus, Cyperus iria and Cyperus rotundus, and Eleocharis acicularis.

The pattern of persistence of flurtamone and diflufenican allow the method of the present invention to be practised by the time-separated application of separate formulations.

In accordance with the usual practice, a tank mix may be prepared prior to use by combining separate formulations of the individual herbicidal components.

According to a further feature of the present invention there is provided a method of controlling the growth of weeds at a locus which comprises applying to the locus (a) flurtamone (b) diflufenican and (c) isoproturon by pre- or post-emergence application.

The following Experiments illustrate the present invention.

## EXPERIMENTAL PROCEDURE

### Flurtamone and Diflufenican

The experiments were carried out pre-emergence of the weed species at a research farm in Essex, England. Flurtamone (formulated as water-dispersible granules) and diflufenican (formulated as an aqueous suspension concentrate) were weighed out and dissolved in water to give a 650ml solution containing the appropriate concentrations and ratios of active ingredients. The solution was mixed for one hour and applied at a spray volume of 231 litres/hectare to a 2 metre by 4 metre test plot comprising the weed species which were sown 2 days earlier. 3 replicates were performed. A control plot was sprayed with a solution not containing test compound. Visual assessment of phytotoxicity was made after 102 days for each weed species based on a comparison with the control plot.

The tables below show the observed percentage control of the weed species by each combination, with the figure in brackets representing the predicted value using the Limpel formula.

5

**EXAMPLE B1**

Trials showing the nature of the synergistic biological effect of the combination of flurtamone with diflufenican on Lolium multiflorum

The experiment is carried out having sown Lolium multiflorum seeds.

|  | | Diflufenican | | |
|---|---|---|---|---|
|  | g/ha | 0 | 100 | 150 |
| Flurtamone | 0 | - | 0 | 23 |
|  | 250 | 35 | 90(35) | 99(50) |
|  | 325 | 73 | 99(73) | 100(79) |

**EXAMPLE B2**

Trial demonstrating the nature of the synergistic biological effect of the combination of flurtamone with diflufenican on Alopecurus myosuroides

|  | | Diflufenican | | |
|---|---|---|---|---|
|  | g/ha | 0 | 100 | 150 |
| Flurtamone | 0 | - | 67 | 70 |
|  | 250 | 25 | 100(75) | 100(78) |
|  | 325 | 63 | 100(88) | 100(89) |

**EXAMPLE B3**

Trial demonstrating the nature of the synergistic biological effect of the combination of flurtamone with diflufenican on Galium aparine

The experiment is carried out having sown Galium aparine seeds.

|  | | Diflufenican | |
|---|---|---|---|
|  | g/ha | 0 | 100 |
| Flurtamone | 0 | - | 87 |
|  | 250 | 40 | 98(92) |

**EXAMPLE B4**

Trial demonstrating the nature of the synergistic biological effect of the combination of flurtamone with diflufenican on Avena fatua

The experiment is carried out having sown Avena fatua seeds.

| | | Diflufenican | | |
|---|---|---|---|---|
| | g/ha | 0 | 100 | 150 |
| Flurtamone | 0 | - | 0 | 13 |
| | 250 | 25 | 58(25) | 77(35) |
| | 325 | 55 | 89(55) | 91(61) |

With reference to the formula given at the beginning of the description, the results above clearly demonstrate the excellent and unexpected degree of synergism obtained with the combination of the invention.

It will be understood that the results presented above were all obtained in field trials. Such trials generally represent a more rigorous test of herbicidal properties than tests in the greenhouse, where test plants are protected from the variable conditions to which they are inevitably subject in the open field. Because of the variability of conditions in field tests, it is generally more difficult to secure a clear showing of synergism than in greenhouse testing. Nevertheless, herbicidal mixtures which demonstrate synergism in greenhouse testing must, if they are to be of commercial utility, be capable of demonstrating synergism under field conditions. i.e.under the conditions which will prevail when they are used by a farmer. The results obtained in the foregoing Examples therefore represent a particularly clear demonstration of synergism under practical conditions.

**EXAMPLEC1**

Flurtamone, Diflufenican and Isoproturon

The experiments were carried out pre-emergence of the weed species at a research farm in Essex, England. Flurtamone (formulated as water-dispersible granules), diflufenican (formulated as an aqueous suspension concentrate) and isoproturon (formulated as an aqueous suspension concentrate) were weighed out and dissolved in water to give a 650ml solution containing the appropriate concentrations and ratios of active ingredients. The solution was mixed for one hour and applied at a spray volume of 231 litres/hectare to a 2 metre by 5 metre test plot comprising the weed species which were sown 2 days earlier. 3 replicates were performed. A control plot was sprayed with a solution not containing test compound. Visual assessment of phytotoxicity was made after 198 days for each weed species based on a comparison with the control plot.

The results for various mixtures of diflufenican, flurtamone and isoproturon against weed species were as follows:

|  | g/ha | Alomy | Avefa | Lolmu | Galap | Sinar | Steme | Verhe | Verpe | Vioar | Matin | Lampu |
|---|---|---|---|---|---|---|---|---|---|---|---|---|
| Flu | 175 | 100 | 88 | 100 | 100 | 100 | 100 | 100 | 100 | 100 | 100 | 100 |
| DFF | 70 |  |  |  |  |  |  |  |  |  |  |  |
| IPU | 525 |  |  |  |  |  |  |  |  |  |  |  |
| Flu | 250 | 100 | 88 | 100 | 100 | 100 | 100 | 100 | 100 | 100 | 100 | 100 |
| DFF | 100 |  |  |  |  |  |  |  |  |  |  |  |
| IPU | 750 |  |  |  |  |  |  |  |  |  |  |  |
| Flu | 325 | 100 | 97 | 100 | 100 | 100 | 100 | 100 | 100 | 100 | 100 | 100 |
| DFF | 130 |  |  |  |  |  |  |  |  |  |  |  |
| IPU | 975 |  |  |  |  |  |  |  |  |  |  |  |

Note the following abbrevations were used:

For the active ingredients:

Flu = Flurtamone;  DFF = Diflufenican;  IPU = Isoproturon

For the weed species:

Alomy = Alopecurus myosuroides          Avefa = Avena fatua

Lolmu= Lolium multiflorum               Galap= Galium aparine

Sinar= Sinapis arvensis                 Steme= Stellaria media

Verhe= Veronica hederifolia             Verpe= Veronica persica

Vioar= Viola arvensis                   Matin= Matricaria inodora

Lampu= Lamium purpureum

**Claims**
**Claims for the following Contracting States : AT, BE, CH, DE, DK, FR, GB, GR, IE, IT, LI, LU, NL, PT, SE**

1. A herbicidal composition comprising flurtamone, which is 5-(methylamino)-2-phenyl-4-[3-(trifluoromethyl)-phenyl]-3(2H)-furanone, and diflufenican, which is N-(2,4-difluorophenyl)-2-[3-(trifluoromethyl)phenoxy]-3-pyridinecarboxamide, in association with a herbicidally acceptable diluent or carrier and/or surfactant.

2. A composition according to claim 1 in which the weight ratio of flurtamone : diflufenican is from 80:1 to 0.1:1.

3. A composition according to claim 1 or 2 in which the ratio of flurtamone : diflufenican is from 5.3:1 to 0.75:1.

4. A composition according to claim 1, 2 or 3 in which the ratio of flurtamone : diflufenican is from 3.25:1 to 1.66:1.

5. A composition according to any one of claims 1 to 4 in which the composition is in the form of a wettable powder, a water dispersible granule or an aqueous suspension concentrate.

6. A composition according to any one of claims 1 to 5 comprising isoproturon, which is 3-(4-isopropylphenyl)-1,1-dimethylurea.

7. A composition according to claim 6 wherein the eight ratio of diflufenican : isoproturon is from 1:3 to 1:25.

8. A product comprising flurtamone, which is 5-(methylamino)-2-phenyl-4-[3-(trifluoromethyl)-phenyl]-3-(2H)-furanone, and diflufenican, which is N-(2,4-difluorophenyl)-2-[3-(trifluoromethyl)phenoxy]-3-pyridinecarboxamide, as a combined preparation for simultaneous, separate or sequential use in controlling the growth of weeds at a locus.

9. A method of controlling the growth of weeds at a locus which comprises applying to the locus flurtamone, which is 5-(methylamino)-2-phenyl-4-[3-(trifluoromethyl)-phenyl]-3(2H)-furanone, and diflufenican, which is N-(2,4-difluorophenyl)-2-[3-(trifluoromethy)phenoxy]-3-pyridinecarboxamide, by pre- or post- emergence application.

10. A method according to claim 9 wherein the application rate of flurtamone and diflufenican is 400 to 150 g/ha of flurtamone and 200 to 75 g/ha of diflufenican, in proportions of from 5.3:1 to 0.75:1 of flurtamone : diflufenican.

11. A method according to claim 9 or 10 wherein the application rate of flurtamone and diflufenican is 325 to 250 g/ha of flurtamone and 150 to 100 g/ha of diflufenican, in proportions of from 3.25:1 to 1.66:1 of flurtamone : diflufenican.

12. A method according to claim 9, 10 or 11 for the control of weeds in an autumn-sown cereal crop.

13. A method according to claim 9, 10, 11 or 12 which further comprises applying to the locus isoproturon, which is 3-(4-isopropylphenyl)-1,1-dimethylurea.

**Claims for the following Contracting State : ES**

1. A method of controlling the growth of weeds at a locus which comprises applying to the locus flurtamone which is 5-(methylamino)-2-phenyl-4-[3-(trifluoromethyl)-phenyl]-3(2H)-furanone, and diflufenican, which is N-(2,4-difluorophenyl)-2-[3-(triiluoromethyl)phenoxy]-3-pyridinecarboxamide, by pre- or post- emergence application.

2. A method according to claim 1 wherein the application rate of flurtamone and diflufenican is 400 to 150 g/ha of flurtamone and 200 to 75 g/ha of diflufenican, in proportions of from 5.3:1 to 0.75:1 of flurtamone : diflufenican.

3. A method according to claim 1 or 2 wherein the application rate of flurtamone and diflufenican is 325 to 250 g/ha of flurtamone and 150 to 100 g/ha of diflufenican, in proportions of from 3.25:1 to 1.66:1 of flurtamone : diflufenican.

4. A method according to claim 1, 2 or 3 for the control of weeds in an autumn-sown cereal crop.

5. A method according to claim 1, 2, 3 or 4 which further comprises applying to the locus isoproturon, which is 3-(4-isopropylphenyl)-1,1-dimethylurea.

**Patentansprüche**
**Patentansprüche für folgende Vertragsstaaten : AT, BE, CH, DE, DK, FR, GB, GR, IE, IT, LI, LU, NL, PT, SE**

1. Herbizide Zusammensetzung, die Flurtamon, das 5-(Methylamino)-2-phenyl-4-[3-(trifluormethyl)-phenyl]-3(2H)-furanon ist, und Diflufenican, das N-(2,4-Difluorphenyl)-2-[3-(trifluormethyl)-phenoxy]-3-pyridincarboxamid ist, zusammen mit einem herbizid annehmbaren Verdünnungsmittel oder Träger und/oder oberflachenaktiven Mittel umfaßt.

EP 0 531 116 B1

**2.** Zusammensetzung nach Anspruch 1, worin das Gewichtsverhältnis von Flurtamon : Diflufenican 80:1 bis 0,1:1 beträgt.

**3.** Zusammensetzung nach Anspruch 1 oder 2, worin das Verhältnis von Flurtamon : Diflufenican 5,3:1 bis 0,75:1 beträgt.

**4.** Zusammensetzung nach Anspruch 1,2 oder 3, worin das Verhältnis von Flurtamon : Diflufenican 3,25:1 bis 1,66:1 beträgt.

**5.** Zusammensetzung nach einem der Ansprüche 1 bis 4, worin die Zusammensetzung in Form eines befeuchtbaren Pulvers, wasserdispergierbarer Granula oder eines wäßrigen Suspensionkonzentrats vorliegt.

**6.** Zusammensetzung nach einem der Ansprüche 1 bis 5, die Isoproturon umfaßt, das 3-(4-Isopropylphenyl)-1,1-dimethylharnstoff ist.

**7.** Zusammensetzung nach Anspruch 6, worin das Gewichtsverhältnis von Diflufenican : Isoproturon 1:3 bis 1:25 beträgt.

**8.** Produkt, welches Flurtamon, das 5-(Methylamino)-2-phenyl-4-[3-(trifluormethyl)-phenyl]-3(2H)-furanon ist, und Diflufenican, das N-(2,4-Difluorphenyl)-2-[3-(trifluormethyl)phenoxy]-3-pyridincarboxamid ist, als kombinierte Präparation zur gleichzeitigen, getrennten oder sequentiellen Verwendung zur Wachstumskontrolle von Unkräutern an einem Ort umfaßt.

**9.** Verfahren zur Wachstumskontrolle von Unkräutern an einem Ort, das die Anwendung von Flurtamon, das 5-(Methylamino)-2-phenyl-4-[3-(trifluormethyl)-phenyl]-3(2H)-furanon ist, und Diflufenican, das N-(2,4-Difluorphenyl)-2-[3-(trifluormethyl)phenoxy]-3-pyridincarboxamid ist, vor oder nach dem Auswuchs umfaßt.

**10.** Verfahren nach Anspruch 9, worin die Anwendungsmenge von Flurtamon und Diflufenican 400 bis 150 g/ha Flurtamon und 200 bis 75 g/ha Diflufenican in Verhältnissen von 5,3:1 bis 0,75:1 Flurtamon : Diflufenican beträgt.

**11.** Verfahren nach Anspruch 9 oder 10, worin die Anwendungsmenge von Flurtamon und Diflufenican 325 bis 250 g/ha Flurtamon und 150 bis 100 g/ha Diflufenican in Verhältnissen von 3,25:1 bis 1,66:1 Flurtamon : Diflufenican beträgt.

**12.** Verfahren nach Anspruch 9, 10 oder 11 zur Kontrolle von Unkräutern bei im Herbst angesähten Getreidefeldfrüchten.

**13.** Verfahren nach Anspruch 9, 10, 11 oder 12, das ferner die Anwendung von Isoproturon, das 3-(4-Isopropylphenyl)-1,1-dimethylharnstoff ist, am Ort umfaßt.

**Patentansprüche für folgenden Vertragsstaat : ES**

**1.** Verfahren zur Wachstumskontrolle von Unkräutern an einem Ort, das die Anwendung von Flurtamon, das 5-(Methylamino)-2-phenyl-4-[3-(trifluormethyl)-phenyl]-3(2H)-furanon ist, und Diflufenican, das N-(2,4-Difluorphenyl)-2-[3-(trifluormethyl)phenoxy]-3-pyridincarboxamid ist, vor oder nach dem Auswuchs umfaßt.

**2.** Verfahren nach Anspruch 1, worin die Anwendungsmenge von Flurtamon und Diflufenican 400 bis 150 g/ha Flurtamon und 200 bis 75 g/ha Diflufenican in Verhältnissen von 5,3:1 bis 0,75:1 Flurtamon : Diflufenican beträgt.

**3.** Verfahren nach Anspruch 1 oder 2, worin die Anwendungsmenge von Flurtamon und Diflufenican 325 bis 250 g/ha Flurtamon und 150 bis 100 g/ha Diflufenican in Verhältnissen von 3,25:1 bis 1,66:1 Flurtamon : Diflufenican beträgt.

10

**4.** Verfahren nach Anspruch 1, 2 oder 3 zur Kontrolle von Unkräutern bei im Herbst angesähten Getreidefeldfrüchten.

**5.** Verfahren nach Anspruch 1, 2, 3 oder 4, das ferner die Anwendung von Isoproturon, das 3-(4-Isopropylphenyl)-1,1-dimethylharnstoff ist, am Ort umfaßt.

**Revendications**
**Revendications pour les Etats contractants suivants : AT, BE, CH, DE, DK, FR, GB, GR, IE, IT, LI, LU, NL, PT, SE**

**1.** Composition herbicide comprenant de la flurtamone, qui est la 5-(méthylamino)-2-phényl-4-[3-(trifluorométhyl)-phényl]-3(2H)-furannone, et du diflufénican, qui est le N-(2,4-difluorophényl)-2-[3-(trifluorométhyl)phénoxy]-3-pyridinecarboxamide, en association avec un diluant ou support et/ou un agent tensio-actif acceptables du point de vue herbicide.

**2.** Composition suivant la revendication 1, dans laquelle le rapport en poids de la flurtamone ou diflufénican est de 80:1 à 0,1:1.

**3.** Composition suivant la revendication 1 ou 2, dans laquelle le rapport de la flurtamone au diflufénican est de 5,3:1 à 0,75:1.

**4.** Composition suivant la revendication 1, 2 ou 3, dans laquelle le rapport de la flurtamone au difluflénican est de 3,25:1 à 1,66:1.

**5.** Composition suivant l'une quelconque des revendications 1 à 4, qui est sous la forme d'une poudre mouillable, de granulés dispersables dans l'eau ou d'un concentré en suspension aqueuse.

**6.** Composition suivant l'une quelconque des revendications 1 à 5, comprenant de l'isoproturon, qui est la 3-(4-isopropylphényl)-1,1-diméthylurée.

**7.** Composition suivant la revendication 6, dans laquelle le rapport en poids du diflufénican à l'isoproturon est de 1:3 à 1:25.

**8.** Produit comprenant de la flurtamone, qui est la 5-(méthylamino)-2-phényl-4-[3-(trifluorométhyl)-phényl]-3(2H)-furannone, et du diflufénican, qui est le N-(2,4-difluorophényl)-2-[3-(trifluorométhyl)phénoxy]-3-pyridinecarboxamide, sous forme d'une préparation combinée en vue d'une utilisation simultanée, séparée ou séquentielle dans la lutte contre la croissance de mauvaises herbes sur un site.

**9.** Procédé pour combattre la croissance de mauvaises herbes sur un site, qui comprend l'application au site de flurtamone, qui est la 5-(méthylamino)-2-phényl-4-[3-(trifluorométhyl)-phényl]-3(2H)-furannone, et de diflufénican, qui est le N-(2,4-difluorophényl)-2-[3-(trifluorométhyl)phénoxy]-3-pyridinecarboxamide, par application en pré-levée ou en post-levée.

**10.** Procédé suivant la revendication 9, dans lequel le taux d'application de flurtamone et de diflufénican est de 400 à 150 g/ha de flurtamone et de 200 à 75 g/ha de diflufénican, dans des rapports flurtamone:diflufénican de 5,3:1 à 0,75:1.

**11.** Procédé suivant la revendication 9 ou 10, dans lequel le taux d'application de flurtamone et de diflufénican est de 325 à 250 g/ha de flurtamone et de 150 à 100 g/ha de diflufénican, dans des rapports flurtamone:diflufénican de 3,25:1 à 1,66:1.

**12.** Procédé suivant la revendication 9, 10 ou 11, pour la lutte contre des mauvaises herbes dans des cultures de céréales semées en automne.

**13.** Procédé suivant la revendication 9, 10, 11 ou 12, qui comprend en outre l'application au site d'isoproturon, qui est le 3-(4-isopropylphényl)-1,1-diméthylurée.

**Revendications pour l'Etat contractant suivant : ES**

1.  Procédé pour combattre la croissance de mauvaises herbes sur un site, qui comprend l'application au site de flurtamone, qui est la 5-(méthylamino)-2-phényl-4-[3-(trifluorométhyl)-phényl]-3(2H)-furannone, et de diflufénican, qui est le N-(2,4-difluorophényl)-2-[3-(trifluorométhyl)phénoxy]-3-pyridinecarboxamide, par application en pré-levée ou en post-levée.

2.  Procédé suivant la revendication 1, dans lequel le taux d'application de flurtamone et de diflufénican est de 400 à 150 g/ha de flurtamone et de 200 à 75 g/ha de diflufénican, dans des rapports flurtamone:diflufénican de 5,3:1 à 0,75:1.

3.  Procédé suivant la revendication 1 ou 2, dans lequel le taux d'application de flurtamone et de diflufénican est de 325 à 250 g/ha de flurtamone et de 150 à 100 g/ha de diflufénican, dans des rapports flurtamone:diflufénican de 3,25:1 à 1,66:1.

4.  Procédé suivant la revendication 1, 2 ou 3, pour la lutte contre des mauvaises herbes dans des cultures de céréales semées en automne.

5.  Procédé suivant la revendication 1, 2, 3 ou 4, qui comprend en outre l'application au site d'isoproturon, qui est le 3-(4-isopropylphényl)-1,1-diméthylurée.